Europäisches Patentamt

European Patent Office

Office européen des brevets

(19)

(11) Publication number : **0 497 743 A2**

## (12) EUROPEAN PATENT APPLICATION

(21) Application number : **92830026.8**

(51) Int. Cl.$^5$ : **B32B 27/32**

(22) Date of filing : **24.01.92**

(30) Priority : **31.01.91 IT 2491**

(43) Date of publication of application :
**05.08.92 Bulletin 92/32**

(84) Designated Contracting States :
**DE FR GB**

(71) Applicant : **FRANCESCONI & C. S.r.l.**
**Via G. Galilei 40**
**I-50040 Seano, Carmignano, Firenze (IT)**

(72) Inventor : **Francesconi, Piero**
**Via Pico della Mirandola n.12**
**I-50132 Firenze (IT)**

(74) Representative : **Mannucci, Gianfranco,**
**Dott.-Ing. et al**
**Ufficio Tecnico Ing. A. Mannucci Via della**
**Scala 4**
**I-50123 Firenze (IT)**

(54) **Heat-shrinkable three-layered film of synthetic resins, with a central layer of very low density polyethylene.**

(57)    A heat-shrinkable synthetic resin film having at least three layers, with a central layer essentially of linear very low density polyethylene (VLDPE), i.e. of a density of less than or at most equal to 0.908, and with the outer layers formed from a mixture of a propylene copolymer and at least one additive.

EP 0 497 743 A2

Jouve, 18, rue Saint-Denis, 75001 PARIS

The invention relates to a particular embodiment of a heat-shrinkable synthetic resin film for packages and packaging in general - also for foodstuffs - of the industrial, semi industrial and artisan types. There are already known films of the abovementioned type with an interlayer of polyolefin resin, such as linear polyethylene of medium or fairly low density, i.e. of the order of 0.91 to 0.94, with outer layers of propylene copolymers or polypropylene.

It is the object of the invention to obtain a heat-shrinkable film which shows improved properties with regard to resistance, weldability, transparency, brightness and others, and improved processability on machinery currently in use.

It has been found, surprisingly, and this is the basis of the invention, that, in a heat-shrinkable synthetic resin film having at least three layers - a central layer of linear polyethylene and outer layers consisting of a polypropylene - a central layer essentially consisting of a linear very low density polyethylene (VLDPE) of a density of less than or at most equal to 0.908 provides an increased tear strength and other advantageous properties, which are enhanced if the outer layers are formed with a mixture of a propylene copolymer and at least one additive.

The outer layers can advantageously contain an additive for enhancing the transparency and brightness of the film. This additive can be a resin based on saturated acyclic hydrocarbons, introduced in a quantity of between 0.5% and 20%, preferably in a quantity of between 5% and 14% and especially of about 10%, of the total weight of the material of said outer layers.

The outer layers can contain a further additive for increasing the strength of welds. This further additive can be a dispersion of an aluminum salt of an organic compound in the polymer, introduced in a quantity of between 0.2% and 10%, preferably in a quantity of between 1% and 5% and especially about 2.5%, of the total weight of the material of said outer layers.

With the embodiment as defined above, a heat-shrinkable film of improved quality is obtained, in particular a film which is highly resistant to tearing even in very fine thicknesses - gives strong welds, is bright and transparent and also more easily processable - in a reliable manner - on machinery currently in use on the market.

## Claims

1. Heat-shrinkable film of synthetic resins, having at least three layers, with a central layer of linear polyethylene and outer layers consisting of a polypropylene, for the purposes indicated, characterized in that the central layer consists essentially of a very low density linear polyethylene (VLDPE) of a density of less than or at most equal to 0,908, and the outer layers are formed from a mixture of a propylene copolymer and at least one additive.

2. Heat-shrinkable film according to Claim 1, characterized in that the outer layers contain an additive for enhancing the transparency and brightness of the film.

3. Heat-shrinkable film according to Claim 2, characterized in that the said additive is a resin based on saturated acyclic hydrocarbons, introduced in a quantity of between 0,5% and 20% of the total weight of the material of said outer layers.

4. Heat-shrinkable film according to Claim 3, characterized in that the said additive is introduced in a quantity of between 5% and 14% and especially 10% of the total weight of the material of said outer layers.

5. Heat-shrinkable film according to Claim 1, characterized in that the outer layers contain a further additive for increasing the strength of welds.

6. Heat-shrinkable film according to Claim 5, characterized in that the said further additive is a dispersion of an aluminum salt of an organic compound in the polymer, introduced in a quantity of between 0,2% and 10% of the total weight of the material of said outer layers.

7. Heat-shrinkable film according to Claim 6, characterized in that the said further additive is introduced in a quantity of between 1% and 5% and especially 2,5% of the total weight of the material of said outer layers.

8. Heat-shrinkable film as defined and for the purposes indicated.